# EUROPÄISCHE PATENTSCHRIFT

(11) **EP 0 246 698 B1**
(45) Veröffentlichungstag und Bekanntmachung des Hinweises auf die Patenterteilung: **28.07.1993**
(21) Anmeldenummer: 87200880.0
(22) Anmeldetag: 13.05.1987
(51) Int. Cl.: H04N 9/64

(54) **Schaltungsanordnung für einen Fernsehempfänger mit einem Videotextdekoder**
Circuit arrangement for a television receiver provided with a teletext decoder
Configuration de circuit pour un récepteur de télévision avec décodeur de vidéotexte

(30) Priorität: 22.05.1986 DE 3617251
(43) Veröffentlichungstag der Anmeldung: 25.11.1987
(73) Patentinhaber: Philips Patentverwaltung GmbH, 22335 Hamburg (DE); Philips Electronics N.V., 5621 BA Eindhoven (NL)
(72) Erfinder: Johanndeiter, Martin, D-2000 Hamburg 61 (DE); Oldach, Detlef, D-2102 Hamburg 93 (DE)
(74) Vertreter: Hartmann, Heinrich, Dipl.-Ing.

(56) Entgegenhaltungen:
- IEEE TRANSACTIONS ON CONSUMER ELECTRONICS, Band CE-30, Nr. 3, August 1984, Seiten 429-436, IEEE, New York, US; N.G. DAMOUNY: "Teletext decoders-keeping up with the latest technology advances"
- PATENT ABSTRACTS OF JAPAN, Band 8, Nr. 155 (E-256)[1592], 19. Juli 1984; & JP-A-59 58 987 (HITACHI SEISAKUSHO K.K.) 04-04-1984
- ELECTRONICS INTERNATIONAL, Band 54, Nr. 16, 11. August 1981, New York, US; T. FISCHER: "Digital VLSI breeds next-generation TV receivers"

## Beschreibung

Die Erfindung betrifft eine Schaltungsanordnung für einen Fernsehempfänger mit einem Fernsehsignaldekoder, der aus dem an seinem Eingang anliegenden Fernsehsignal das an einem Helligkeitssignalausgang abnehmbare Helligkeitssignal mittels einer Tiefpaßfilteranordnung zur Unterdrückung des Farbartsignals gewinnt, und mit einem Videotextdekoder, der aus den Videotextdaten Signale erzeugt, aus denen Ansteuersignale für eine Bildwiedergabeeinrichtung abgeleitet werden.

Eine solche Schaltungsanordnung ist aus der Valvo-Veröffentlichung "Technische Informationen für die Industrie 80 04 07" mit dem Titel "Videotext und Bildschirmtext mit den LSI-Schaltungen SAA 5020, SAA 5030, SAA 5041 und SAA 5051" bekannt. Das Fernsehsignal wird hier dem Videotextdekoder und dem Fernsehsignaldekoder zur Gewinnung von Signalen zugeführt, aus denen Ansteuersignale für die Bildröhre abgeleitet werden.

Die Videotextdaten werden dem Fernsehsignal während der Vertikalaustastlücken des Fernsehbildes in den Zeilen 17, 18 und 330, 331 übertragen. Die Videotextinformation wird mittels des Videotextdekoders im Fernsehempfänger aus dem Fernsehsignal entnommen, verarbeitet und in Form alphanumerischer und graphischer Zeichen auf dem Bildschirm dargestellt. Die Videotextinformation eignet sich z.B. zur Übermittlung von Nachrichten und zur Bilduntertitelung.

Ist der Fernsehsignaldekoder als digitaler Prozessor ausgebildet, so hat sich in der Praxis gezeigt, daß aufgrund der erheblichen Signallaufzeiten im Fernsehsignaldekoder eine unakzeptable Verschiebung zwischen dem eingeblendeten Videotext (Bilduntertitelung) und dem Fernsehbild auftritt. Das Fernsehbild und die Untertitelung sind nicht synchron. Die Verschiebung müßte dann durch Verzögerungselemente ausgeglichen werden.

Der Erfindung liegt die Aufgabe zugrunde, eine Schaltungsanordnung der eingangs genannten Art so auszubilden, daß weder bei der analogen noch bei der digitalen Ausführung des Fernsehsignaldekoders eine wahrnehmbare Verschiebung zwischen Fernsehbild und Untertitelung möglich ist.

Die Aufgabe wird erfindungsgeäß dadurch gelöst, daß der Eingang des Videotextdekoders mit dem Helligkeitssignalausgang gekoppelt ist, daß die Tiepfaßfilteranordnung zur Unterdrückung des Farbartsignals einen ersten Dämpfungsverlauf und zum Durchlassen aller Videotextdaten einen zweiten Dämpfungsverlauf aufweist, daß der Dämpfungsverlauf der Tiefpaßfilteranordnung mittels eines von einer Umschalteinrichtung aus dem Fernsehsignal gewonnenen Umschaltsignals der Dämpfungsverlauf so umgeschaltet wird, daß wenigstens während der Zeit, in der die Videotextdaten vorliegen, der zweite Dämpfungsverlauf der Tiefpaßfilteranordnung eingeschaltet ist.

Bei der erfindungsgemäßen Schaltungsanordnung wird dem Videotextdekoder nicht direkt das Fernsehsignal zugeführt, sondern das im Fernsehsignaldekoder aus dem Fernsehsignal gewonnene und keinen Anteil des Farbartsignals enthaltene Helligkeitssignal. Da in der Regel bei der Unterdrückung des Farbartsignals ein Tiefpaß verwendet wird, dessen Grenzfrequenz bei ungefähr 3 MHz liegt, muß mindestens während der Zeit, in der die Videotextinformation vorliegt, ein Tiefpaß verwendet werden, dessen Grenzfrequenz ungefähr 3,5 MHz beträgt, damit die Videotextinformation unverfälscht empfangen werden kann. Die maximale Datenrate beträgt beim Videotext nämlich 6,9375 Mbit/s, woraus die höchste zu übertragende Frequenz von 3,496 MHz resultiert.

Erfindungsgemäß weist die Tiefpaßfilteranordnung zwei Dämpfungsverläufe auf. Der erste Dämpfungsverlauf ist so ausgelegt, daß das Farbartsignal unterdrückt wird und der zweite so, daß alle Videotextdaten unverfälscht zum Videotextdekoder gelangen. Die Tiefpaßfilteranordnung kann z.B. einen ersten Tiefpaß mit dem ersten Dämpfungsverlauf zur Unterdrückung des Farbartsignals aufweisen und einen zweiten Tiefpaß mit dem zweiten Dämpfungsverlauf zum Durchlassen aller Videotextdaten. Mittels eines Umschalters wird entweder dem einen oder dem anderen Tiefpaß das Fernsehsignal zugeführt. Andererseits kann die Tiefpaßanordnung mehrere Schalter enthalten, die zwischen verschiedenen Elementen der Anordnung Verbindungen herstellen. Durch Steuerung dieser Schalter kann nun einerseits der erste Dämpfungsverlauf und andererseits der zweite Dämpfungsverlauf eingestellt werden.

Das Umschaltsignal für die Tiefpaßfilteranordnung wird mittels einer Umschalteinrichtung aus dem Fernsehsignal gewonnen. Hierfür sind z.B. das Farbsynchronsignal oder die Synchronimpulse (Horizontal synchron- oder Vertikalsynchronimpulse) geeignet.

Da während der Zeit, in der der Vertikalsynchronimpuls auftritt, die Bildwiedergabeeinrichtung kein Helligkeitssignal wiedergibt, kann das Umschaltsignal aus diesem Vertikalsynchronimpuls abgeleitet werden.

Derartige Fernsehsignaldekoder, die die Farbdifferenzsignale, das Helligkeitssignal und die Fernsehsynchronimpulse gewinnen, sind mit Ausnahme der umschaltbaren Tiefpaßfilteranordnung bekannt und werden als integrierter Schaltkreis realisiert.

Der Videotextdekoder liefert Signale, aus denen einerseits Ansteuersignale für die Bildwiedergabeeinrichtung gebildet werden und andererseits ein Bildaustastsignal zur Austastung des gesamten Fernsehbildes oder von Teilen hiervon (z.B. zur Untertitelung). Diese Ansteuersignale für die Bildwiedergabeeinrichung werden in einer Verknüpfungsstufe erzeugt, die die Ausgangssignale des Fernsehsignaldekoders und des Videotextdekoders erhält.

Die erfindungsgemäße Schaltungsanordnung läßt sich insbesondere dann vorteilhaft einsetzen, wenn der Fernsehsignaldekoder als digitaler Prozessor ausgeführt ist, der ein mittels eines Analog-Digital-Umsetzers umgesetztes Fernsehsignal, das als Folge amplitudendiskreter Abtastwerte mit einer durch ein Taktsignal bestimmten Abtastfrequenz vorliegt, verarbeitet und der an seinen Ausgängen jeweils ein mittels eines Digital-Analog-Umsetzers umgesetztes Signal abgibt. Bei dieser Realisierung kann die Tiefpaßfilteranordnung so ausgelegt werden, daß die Multiplikationsstufen, in denen eine Multiplikation mit Koeffizienten stattfindet, mit Umschaltern verbunden sind, die zwischen zwei Koeffizientenspeichern umschalten. Mit Hilfe der Koeffizienten wird der jeweilige Dämpfungsverlauf der Tiefpaßfilteranordnung bestimmt.

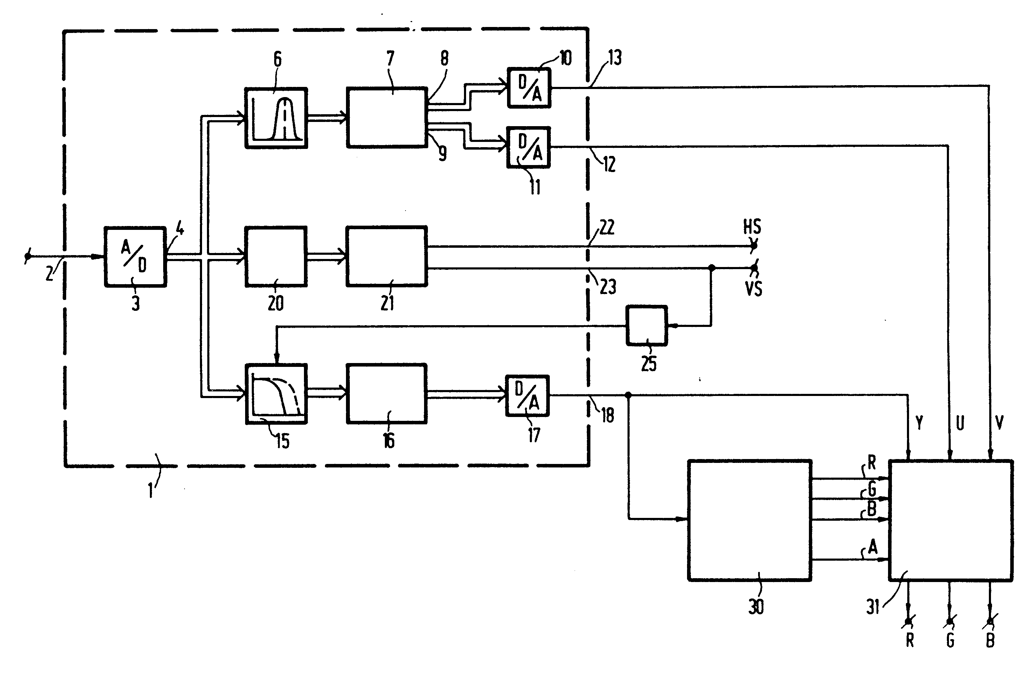

Anhand der Zeichnung, die ein Ausführungsbeispiel der erfindungsgemäßen Schaltungsanordnung zeigt, wird im folgenden die Erfindung näher erläutert.

In der einzigen Figur der Zeichnung wird einem Fernsehsignaldekoder 1 an einem Eingang 2 ein Fernsehsignal (FBAS-Signal) zugeführt. Der Eingang 2 des Fernsehsignaldekoders 1 ist ebenfalls der Eingang eines Analog-Digital-Umsetzers 3. Das Ausgangssignal am Ausgang 4 des Analog-Digital-Umsetzers 3 liegt als Folge binär codierter Abtastwerte vor und weist z.B. eine Auflösung von 7 bit auf. Die Abtastwerte treten mit einer Folgefrequenz, der Abtastfrequenz, von z.B. 13,5 MHz auf.

Der Ausgang 4 des Analog-Digital-Umsetzers 3 ist mit einem Bandpaß 6 verbunden, dessen Mittenfrequenz 4,43 MHz beträgt und der im wesentlichen das Farbartsignal durchläßt. Das Ausgangssignal des Bandpasses 6 wird einer Farbartsignalverarbeitungsstufe 7 zugeleitet, die die beiden Farbdifferenzsignale U und V gewinnt. Das Farbdifferenzsignal U wird an einem Ausgang 8 der Farbartsignalverarbeitungsstufe 7 abgenommen und in einem Digital-Analog-Umsetzer 10 in ein analoges Signal umgesetzt. Das andere Farbdifferenzsignal V wird über einen Ausgang 9 der Farbartsignalverarbeitungsstufe 7 einem Digital-Analog-Umsetzer 11 zugeleitet. Das analoge Farbdifferenzsignal V ist an dem Ausgang 12 des Digital-Analog-Umsetzers 11 abnehmbar, der auch ein Ausgang des Fernsehsignaldekoders 1 ist, und das Farbdifferenzsignal U am Ausgang 13, der auch der Ausgang des Digital-Analog-Umsetzers 10 ist.

Das im Analog-Digital-Umsetzers 3 digitalisierte Fernsehsignal wird weiter einer Tiefpaßfilteranordnung 15 zugeführt, die zwei alternativ einzuschaltende Dämpfungsverläufe aufweist. Der erste Dämpfungsverlauf ist so ausgelegt, daß er das Farbartsignal unterdrückt und z.B. eine Grenzfrequenz bei 3 MHz aufweist. Der zweite Dämpfungsverlauf soll so ausgelegt werden, daß er zumindest alle Videotextdaten durchläßt, und hat z.B. eine Grenzfrequenz bei 3,5 MHz. Eine solche umschaltbare Tiefpaßfilteranordnung kann z.B. mittels zweier Tiefpässe mit unterschiedlichen Dämpfungsveräufen realisiert werden oder durch ein Filter, dessen Multiplizierern jeweils für den entsprechenden Dämpfungsverlauf ausgelegte Koeffizienten zugeführt werden. An einem Multiplizierereingang kann z.B. ein Multiplexer liegen, an dessen Eingängen zwei Koeffizientenspeicher liegen, die wahlweise mit dem Multiplizierereingang verbunden werden. Das Ausgangssignal der Tiefpaßfilteranordnung 15 wird einer Helligkeitssignalverarbeitungsstufe 16 zugeführt, deren Ausgang mit einem Digital-Analog-Umsetzer 17 verbunden ist. Der Ausgang 18 des Digital-Analog-Umsetzers 17, der das Helligkeitssignal Y liefert, ist auch ein Ausgang des Fernsehsignaldekoders 1. Es sei an dieser Stelle erwähnt, daß im Helligkeitssignal auch die Austastimpulse und die Synchronimpulse noch vorhanden sind.

Der Ausgang 4 des Analog-Digital-Umsetzers 3 ist noch mit einer Synchronsignalabtrennstufe 20 verbunden, die aus dem Fernsehsignal die Synchronimpulse gewinnt. Das Ausgangssignal der Stufe 20 wird einer Synchronimpulsverarbeitungsstufe 21 zugeführt, die die Horzizontalimpulse HS und die Vertikalimpulse VS gewinnt und die an einem Ausgang 22 bzw. 23 des Fernsehsignaldekoders 1 zur Verfügung stehen.

Den einzelnen digitalen Elementen, den Digital-Analog-Umsetzern und dem Analog-Digital-Umsetzer 3 wird jeweils ein Taktsignal zugeführt, was aber in der Zeichnung nicht näher dargestellt ist. Der hier dargestellte Fernsehsignaldekoder 1 ist mit Ausnahme der umschaltbaren Tiefpaßfilteranordnung 15 bekannt und wird üblicherweise als integrierter Schaltkreis verwirklicht.

Der Ausgang 23 des Fernsehsignaldekoders 1, an dem die Vertikalsynchronimpulse abnehmbar sind, ist mit einer Umschalteinrichtung 25 verbunden, die das Umschaltsignal für die Tiefpaßfilteranordnung 15 gewinnt. Das Umschaltsignal bewirkt, daß in der Tiefpaßfilteranordnung 15 vom ersten Dämpfungsverlauf auf den zweiten Dämpfungsverlauf umgeschaltet wird. Der zweite Dämpfungsverlauf liegt wenigstens während der Zeit vor, in der die Videotextdaten auftreten, d.h. während der Zeilen 17 und 18 und der Zeilen 330 und 331. Die Umschalteinrichtung 25 kann z.B. Zähler enthalten, die einen von einem Taktsignalgenerator erzeugten Takt zählen. Die Frequenz des Taktsignales ist viel größer als die Frequenz der Vertikalsynchronimpulse. Mit Hilfe der Zähler wird der Zeitpunkt des Auftretens der oben genannten Videotextzeilen bestimmt.

Der Ausgang 18 des Fernsehsignaldekoders 1 ist mit einem Videotextdekoder 30 verbunden, der ein Bildaustastsignal A und drei Farbsignale R, G und B an seinen Ausgängen abgibt. Die Ausgangssignale des Videotextdekoders 30 werden einer Verknüpfungsstufe 31 zugeführt, die außerdem die beiden Farbdifferenzsignale U und V und das Helligkeitssignal Y vom Fernsehsignaldekoder 1 erhält. Die Verknüpfungsstufe 31 erzeugt geeignete Ansteuersignale R, G und B für eine Bildwiedergabeeinrichtung (z.B. Bildröhre). Das Bildaustastsignal A wird zur Austastung des durch die Signale vom Fernsehsignaldekoders 1 gebildeten Fernsehbildes verwendet, d.h. entweder erscheint auf der Bildröhre das normale Fernsehbild oder nur die Videotextinformation oder das Fernsehbild mit einer Untertitelung.

Durch die erfindungsgemäße Schaltungsanordnung wird nun erreicht, daß auch bei Verwendung eines digitalen Fernsehsignaldekoders 1 die zeitliche Zuordnung von Fernsehbild und Videotextinformation gewährleistet ist.

Durch den Videotextdekoder 30 wird zwar auch die Videotextinformation gegenüber dem Bildsignal etwas verzögert. Diese Verzögerung ist jedoch für den Zuschauer nicht wahrnehmbar, d.h. die Videotextinformation und das Fernsehbild erscheinen synchron.

## Patentansprüche

1. Schaltungsanordnung für einen Fernsehempfänger mit einem Fernsehsignaldekoder (1), der aus dem an seinem Eingang (2) anliegenden Fernsehsignal das an einem Helligkeitssignalausgang (18) abnehmbare Helligkeitssignal mittels einer Tiefpaßfilteranordnung (15) zur Unterdrückung des Farbartsignals gewinnt, und mit einem Videotextdekoder (30), der aus den Videotextdaten Signale erzeugt, aus denen Ansteuersignale für eine Bildwiedergabeeinrichtung abgeleitet werden,
dadurch gekennzeichnet, daß der Eingang des Videotextdekoders (30) mit dem Helligkeitssignalausgang (18) gekoppelt ist, daß die Tiefpaßfilteranordnung (15) zur Unterdrückung des Farbartsignals einen ersten Dämpfungsverlauf und zum Durchlassen aller Videotextdaten einen zweiten Dämpfungsverlauf aufweist, daß der Dämpfungsverlauf der Tiefpaßfilteranordnung (15) mittels eines von einer Umschalteinrichtung (25) aus dem Fernsehsignal gewonnenen Umschaltsignals so umgeschaltet wird, daß wenigstens während der Zeit, in der die Videotextdaten vorliegen, der zweite Dämpfungsverlauf der Tiefpaßfilteranordnung (15) eingeschaltet ist.

2. Schaltungsanordnung nach Anspruch 1,
dadurch gekennzeichnet, daß die Umschalteinrichtung (25) aus den Synchronimpulsen das Umschaltsignal ableitet.

3. Schaltungsanordnung nach Anspruch 2,
dadurch gekennzeichnet, daß die Umschalteinrichtung (25) aus den Vertikalsynchronimpulsen das Umschaltsignal ableitet.

4. Schaltungsanordnung nach einem der vorhergehenden Ansprüche, dadurch gekennzeichnet, daß eine Verknüpfungsstufe (31) die Ausgangssignale des Fernsehsignaldekoders (1) und des Videotextdekoders (30) zur Erzeugung von Ansteuersignalen für die Bildwiedergabeeinrichtung erhält.

5. Schaltungsanordnung nach einem der vorhergehenden Ansprüche, dadurch gekennzeichnet, daß der Fernsehsignaldekoder (1) als digitaler Prozessor ausgeführt ist, der ein mittels eines Analog-Digital-Umsetzers (3) umgesetztes Fernsehsignal, das als Folge amplitudendiskreter Abtastwerte mit einer durch ein Taktsignal bestimmten Abtastfrequenz vorliegt, verarbeitet und der an seinen Ausgängen (12, 13, 18) jeweils ein mittels eines Digital-Analog-Umsetzers (10, 11, 17) umgesetztes Signal abgibt.

## Claims

1. A circuit arrangement for television receiver comprising a television signal decoder (1), said decoder deriving from the television signal applied to its input (2) the luminance signal supplied by a luminance signal output (18) *via* a low-pass filter arrangement (15) for suppressing the chrominance signal, and comprising a teletext decoder (30) producing signals from the teletext data from which driving signals for a picture display device are derived, characterized in that the input of the teletext decoder (30) is coupled to the luminance signal output (18), in that the low-pass filter arrangement (15) has a first attenuation characteristic to suppress the chrominance signal and a second attenuation characteristic to allow all teletext data to pass, in that the attenuation characteristic of the low-pass filter arrangement (15) is changed over by means of a change-over signal derived from the television signal by a change-over device (25) so that the second attenuation characteristic of the low-pass filter arrangement (15) is switched on at least during the period of time in which the teletext data occur.

2. A circuit arrangement as claimed in Claim 1, characterized in that the change-over device (25) derives the change-over signal from the synchronizing pulses.

3. A circuit arrangement as claimed in Claim 2, characterized in that the change-over device (25) derives the charge-over signal from the vertical synchronizing pulses.

4. A circuit arrangement as claimed in any one of the preceding Claims, characterized in that a combining stage (31) receives the output signals from the television signal decoder (1) and the teletext decoder (30) to produce control signals for the picture display device.

5. A circuit arrangement as claimed in any one of the preceding Claims, characterized in that the television signal decoder (1) is designed as a digital processor processing a television signal converted by means of an analogue-to-digital converter (3), which signal is available as a sequence of amplitude-discrete sampling values having a clock signal-determined sampling rate and each time supplying from its outputs (12, 13, 18) a signal converted by a digital-to-analog converter (10, 11, 17).

## Revendications

1. Montage de circuit pour un récepteur de télévision, comportant un décodeur (1) de signal de télévision qui, à l'aide d'un circuit de filtrage passe-bas (15) servant à déprimer le signal de chrominance, sépare du signal de télévision présent à son entrée (2), le signal de luminosité qui peut être obtenu à une sortie (18) de signal de luminosité, et un décodeur (30) de vidéotex qui crée à partir des données de vidéotex des signaux à partir desquels sont dérivés des signaux de commande d'un dispositif de reproduction d'image, caractérisé en ce que l'entrée du décodeur de vidéotex (30) est couplée à la sortie du signal de luminosité (18), que le circuit de filtrage passe-bas (15) présente une première caractéristique d'atténuation pour déprimer ce signal de chrominance, et une seconde caractéristique d'atténuation pour permettre le passage de toutes les données de vidéotex, que la caractéristique d'atténuation du circuit de filtrage passe-bas (15) est commutée à l'aide d'un signal de commutation extrait du signal de télévision au moyen d'un dispositif de commutation (25) et que la seconde caractéristique d'atténuation du circuit de filtrage passe-bas (15) est enclenchée au moins pendant la durée de la présence de données de vidéotex.

2. Montage de circuit selon la revendication 1, caractérisé en ce que le dispositif de commutation (25) déduit le signal de commutation des impulsions de synchronisation.

3. Montage de circuit selon la revendication 2, caractérisé en ce que le dispositif de commutation (25) déduit le signal de commutation des impulsions de synchronisation verticale.

4. Montage de circuit selon l'une des revendications précédentes, caractérisé en ce qu'un étage combinatoire (31) reçoit les signaux de sortie du décodeur (1) de signal de télévision et du décodeur de vidéotex (30) pour créer des signaux de commande du dispositif de reproduction d'image.

5. Montage de circuit selon l'une des revendications précédentes, caractérisé en ce que le décodeur (1) de signal de télévision est réalisé sous la forme d'un processeur numérique qui traite un signal de télévision converti par un convertisseur analogique-numérique (3), et se présentant sous forme d'une suite de valeurs d'échantillonnage discrètes en amplitude et d'une fréquence d'échantillonnage déterminée par un signal d'impulsions d'horloge, et qui fournit à ses sorties (12, 13, 18) chaque fois un signal converti à l'aide d'un convertisseur numérique-analogique (10, 11, 17).
